# EUROPEAN PATENT SPECIFICATION

(11) **EP 3 992 267 B1**
(45) Date of publication and mention of the grant of the patent: **23.11.2022**
(21) Application number: 20204800.5
(22) Date of filing: 29.10.2020
(51) Int. Cl.: C10K 3/04, C10L 9/08, C01B 3/36

(54) **CO SHIFT UNIT FOR CONVERSING SOLID WASTE INTO SYNGAS**
CO-KONVERTIERUNGSEINHEIT ZUR UMWANDLUNG VON FESTEN ABFÄLLEN IN SYNTHESEGAS
UNITÉ DE CONVERSION DE CO POUR CONVERTIR DES DÉCHETS SOLIDES EN GAZ DE SYNTHÈSE

(43) Date of publication of application: 04.05.2022
(73) Proprietor: RWE Generation NL B.V., 4931 NC Geertruidenberg (NL)
(72) Inventor: Eurlings, Johannes Theodorus Gerardus Marie, 6125 RC Obbicht (NL)
(74) Representative: Keenway Patentanwälte Neumann Heine Taruttis

(56) References cited:
- WO-A1-2015/089556
- WO-A1-2018/044251
- WO-A2-2007/103467
- US-A1- 2009 077 892
- US-A1- 2013 247 448
- US-B2- 8 268 023

## Description

Subject matter of the present invention is a method for the conversion of solid waste into syngas using a CO shift unit and a respective plant.

Municipal Solid Waste (MSW) is generated worldwide and has to be dealt with. In the western hemisphere municipal solid waste is either landfilled or incinerated. Incineration is focused on maximizing the use of the energy content of the municipal solid waste in contrast to recycling or reusing the contents of the municipal solid waste on a molecular scale as e.g. in chemical recycling. Incineration generates issues regarding the emission of pollutants into the atmosphere which results - depending on national or even local legislation - in significant technological efforts necessary to meet the limitations provided by national/local legislation. Further, the products generated by the incineration, e.g. fly ash, bottom ash, gypsum and heavy metal and/or dioxin laden active coal, create further challenges regarding their further use and/or processing. Furthermore, the waste to power efficiency, i.e. the amount of caloric value transferred to heat energy is low and is typically in a range of 20 to 25%.

When chemical recycling is desired often the yield, i.e. the final outcome of usable chemical substances needs improvement and/or the energy efficiency is inappropriate. Frequently, a gas comprising carbon monoxide and hydrogen is generated, e.g. by pyrolysis or the like. To increase the amount of hydrogen in the product stream a CO shift reaction might be used as is known e.g. from US 2009/0077892 A1. To optimize the hydrogen output a large excess supply of water steam is necessary resulting in large amounts of water in the product gas of the CO shift reaction. When this product gas is cooled this leads to a considerable amount of condensing and, thus, large amounts of low level heat in the cooling train, while the product gas is cooled to ambient temperature. The majority of this energy is usually discarded which results in a low energy efficiency. It is, thus, an object of the present invention to overcome the drawbacks of the prior art in this regard.

WO 2007/103467 A2 and US 8 268 023 B2 show apparatuses and processes for recovering heat from shifted syngas.

This object is solved by the features of the independent claims. Dependent claims are directed to preferred embodiments of the invention.

According to the method for increasing the hydrogen content in the product gas stream of the torrefaction of solid recovered fuel (SRF) pellets according to the present invention the solid recovered fuel pellets are torrefied to charred pellets while generating torrefaction gas which is converted to torrefaction syngas comprising hydrogen and carbon monoxide, wherein a syngas stream comprising the torrefaction syngas is provided to a CO shift unit for reacting at least a part of the carbon monoxide with water steam to carbon dioxide and hydrogen generating shifted syngas, wherein the shifted syngas is provided downstream of the CO shift unit to a low temperature heat recovery unit in which the shifted syngas is guided through at least two heat exchangers in which the shifted syngas is in thermal exchange with at least two water streams that are used downstream of the respective heat exchangers as process water during the production of the product gas stream for heating said at least two water streams.

The term syngas is understood throughout this document as a gas comprising hydrogen, carbon monoxide and/or carbon dioxide. Solid recovered fuel pellets are generated from solid waste comprising municipal solid waste. The term torrefaction is understood as a substoichiometric oxidization of the solid recovered fuel pellets to generate a raw syngas comprising hydrogen and carbon monoxide. The resulting charred pellets are preferably gasified in a gasification unit creating syngas. The torrefaction syngas comprising hydrogen and carbon monoxide which is generated e.g. by thermal cracking from the torrefaction gas generated during the torrefaction of the solid recovered fuel pellets is provided to a CO shift unit, preferably in combination with the syngas generated during the gasification process. The CO shift unit, which is preferably a two stage CO shift unit comprising a high temperature CO shift unit and a low temperature CO shift unit, is used to support the carbon monoxide (CO) shift reaction in which carbon monoxide and water steam react to carbon dioxide and hydrogen.

Downstream of the CO shift unit the resulting shifted syngas has a temperature above ambient temperature as required by adjusting the chemical equilibrium in the CO shift unit. E.g. in a two stage CO shift unit the syngas enters the high temperature CO shift reactor at a temperature of about 270°C and leaves the low temperature CO shift reactor at a temperature of about 240°C. Therefore, the shifted syngas has to be cooled down before being able to be stored and/or processed i.e. used as raw material and/or as energy storage medium or provided to a gas cleaning unit in which hydrogen is separated from the remainder of the shifted syngas which is purged as a purge gas. During cooling of the shifted syngas the water steam still being present in the shifted syngas will condense as soon as the temperature is undercutting the dew point. Then, a significant amount of heat energy is released in the form of the condensing energy.

According to the present invention the heat energy content of the shifted syngas before entering the low temperature heat recovery unit is not discarded to ambient by e.g. an air or water cooler but is used to heat at least two process water streams used for the production of the product gas. The at least two product water streams are preferably in the liquid and/or gaseous state i.e. liquid water and/or water steam.

The respective product water stream is, for example, a process water stream used for increasing the steam content of the torrefaction or another syngas before entering the CO shift unit. Alternatively, or cumulatively the process water stream is used during the gasification of the charred pellets in a gasification unit, which performs preferably an entrained flow gasification of the charred pellets. Alternatively, or cumulatively boiler feed water for the generation of high-pressure steam is heated. Preferably, the generation of high-pressure steam is maximized at the expense of the generation of low pressure water steam. The term high-pressure steam is understood throughout this document as comprising pressures in the range of 80 bar to 140 bar, whereas low-pressure steam is understood throughout this document as comprising pressures of about 3 bar to 12 bar. The term medium pressure throughout this document is understood as comprising pressures of about 18 bar to 43 bar.

According to a preferred embodiment the shifted syngas is provided to a gas cleaning unit for generating a product gas stream reach of hydrogen, preferably with a hydrogen content of 99.5 vol.-% and more, while generating a purge gas,
wherein both the purge gas and the torrefaction syngas are compressed and commonly introduced into a saturation column to raise the water content in the syngas stream up stream of the CO shift unit.

This allows to adjust the water content in the syngas provided to the CO shift unit easily. By mixing the purge gas with the torrefaction syngas it is ensured to not loose carbon monoxide and/or hydrogen being possibly present in the purge gas.

According to an embodiment a first syngas stream generated by the gasification of the charred pellets is provided to a high-pressure scrubbing unit to raise the water content in a cleaned syngas stream.

The use of the high- pressure scrubbing unit allows on the one hand to reduce contaminants like long-chain carbon hydrogen compounds in the first syngas stream and on the other hand allows to introduce moisture into the cleaned syngas stream allowing to adjust the water content of the gas stream entering the CO shift unit precisely.

According to an embodiment the shifted syngas is cooled in the low temperature heat recovery unit by bringing into thermal contact with at least one of the following water streams:
a) a process water stream used for the humidification of the syngas stream entering the CO shift unit;
b) a feed water for the gasification of the charred pellets. in particular for quenching; and
c) boiler water to produce high-pressure steam.

In particular, if step c) and at least one of steps a) and b) is realized as well the process is controlled such that the generation of high-pressure steam is prioritized to increase the energy yield of the whole process of producing a product gas stream comprising hydrogen from solid recovered fuel pellets. Preferably, each water stream is passing through at least one heat exchanger which are arranged such that the most efficient use is made of the heat energy content of the shifted syngas.

According to an embodiment the heat exchangers of the low temperature heat recovery unit the pressure of the process water is higher than the pressure of the shifted syngas. This ensures that no syngas penetrates into the respective water stream in case of a leak in the respective heat exchanger.

According to a further aspect of the present invention a plant for the conversion of solid waste provided as solid recovered fuel pellets to a product gas stream rich in hydrogen is proposed, comprising
a torrefaction unit in which the solid recovered fuel pellets are feedable from which a torrefaction gas and charred pellets are producible;
a torrefaction gas processing unit in which the torrefaction gas is converted into a torrefaction syngas;
a CO shift unit downstream of the torrefaction unit which is providable with a combined syngas stream comprising at least the torrefaction syngas and in which a shifted syngas is producible; and
a low temperature heat recovery unit downstream of the CO shift unit which is providable with the shifted syngas, said low temperature heat recovery unit comprising at least two heat exchangers which are each providable with the shifted syngas and a process water stream to increase the temperature of the process water streams.

This allows the efficient use of the low temperature heat in the shifted syngas for heating process water streams used in the production of the product gas stream from solid recovered fuel pellets. The components of the plant according to the present invention are preferably suited and intended to perform the method according to the present invention.

According to an embodiment the low temperature heat recovery unit includes at least two of the following heat exchangers:
a) a second heat exchanger in which water, in particular used in the gasification unit, is heatable by the shifted syngas;
b) a third heat exchanger in which water for the generation of high-pressure steam is heatable by the shifted syngas;
c) a fourth heat exchanger in which water for use in a saturation column for adjusting the water content at least of the torrefaction syngas upstream of the CO shift unit is heatable by the shifted syngas;
d) a fifth heat exchanger in which water for the generation of high-pressure steam is heatable by the shifted syngas; and
e) a sixth heat exchanger in which water, preferably used in the gasification unit,is heatable by the shifted syngas.

The two or more of the second to sixth heat exchangers are arranged in the order of their denotation with a decreasing temperature level of the shifted syngas. E.g. the temperature of the shifted syngas entering the first heat exchanger is higher than the temperature of the shifted syngas entering the third heat exchanger etc. This allows an efficient use of the heat energy of the shifted syngas while cooling the shifted syngas.

According to an embodiment the plant further comprises a saturation column in which a water content at least of the torrefaction syngas is adjustable. The saturation column is preferably a usual wet scrubbing unit in which water is provided on a head of the column and is extracted from a sump of the column while the respective gas stream is flowing against the flow direction of the water. Preferably, the plant comprises a gas cleaning unit downstream of the low heat recovery unit in which hydrogen is separated by a pressure switch adsorption unit, generating a purge gas, whereas the purge gas is provided to the saturation column in combination with the torrefaction syngas.

It should be noted that the individual features specified in the claims may be combined with one another in any desired technologically reasonable manner and form further embodiments of the invention. The specification, in particular taken together with the figures, explains the invention further and specifies particularly preferred embodiments of the invention. Particularly preferred variants of the invention and the technical field will now be explained in more detail with reference to the enclosed figures. It should be noted that the exemplary embodiment shown in the figures is not intended to restrict the invention. The figures are schematic and may not be to scale. The figures display:
- Fig. 1: a plant for the conversion of solid waste into a gas comprising hydrogen including a carbon monoxide shift unit; and
- Fig. 2: a carbon monoxide shift unit.

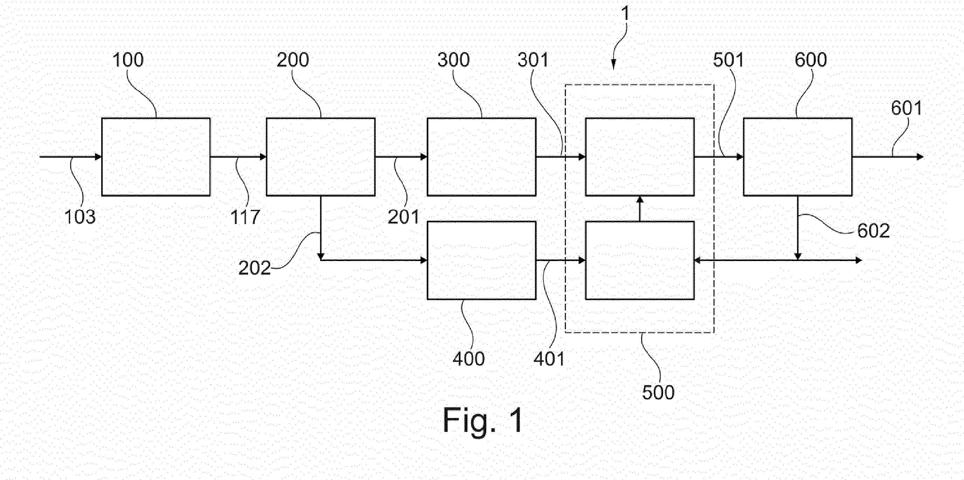

Fig. 1 displays schematically a plant 1 for the conversion of solid waste into a gas comprising hydrogen including a carbon monoxide (CO) shift unit 500. In a CO shift unit 500, a carbon monoxide (CO) shift reaction takes place in which carbon monoxide (CO) reacts with water (H₂O) to form carbon dioxide (CO₂) and hydrogen (H₂):

CO + H₂O ↔ CO₂ + H₂

The reaction is in chemical equilibrium which can be influenced either in direction of the educts or the products in a usual way e.g. by use of the respective temperature and the use and concentration of a specific catalyst. As the reaction is endothermic the water is usually provided as water steam. To shift the chemical equilibrium to the product side to increase the production of hydrogen a molar steam to carbon monoxide ration of about 2.3 to 2.7, in particular about 2.5, has been found to be advantageous. The steam is provided preferably at a pressure which is above the pressure at which the shift reaction is taking place which is preferably about 40 bar. If the molar steam to carbon monoxide ratio of 2.5 is used a surplus of 1.5 moles steam for every mole carbon dioxide remains in the reactor. This results in large amounts of water in the product gas of the CO shift reaction. When this product gas is cooled this leads to a considerable amount of condensing and, thus, so large amounts of low level heat in the cooling train, while the product gas is cooled to ambient temperature. The majority of this energy is usually discarded which results n a low energy efficiency.

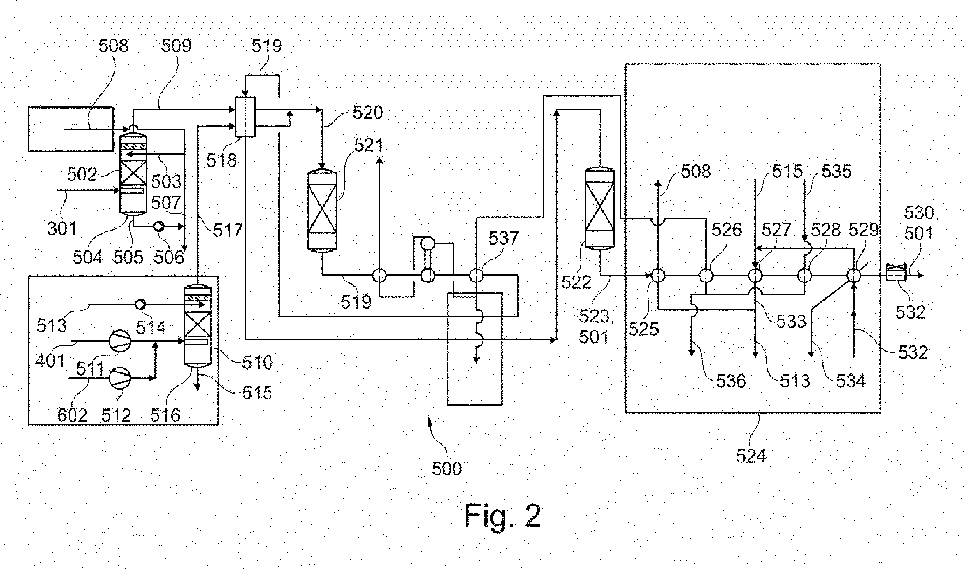

The CO shift unit 500 is part of a plant 1 for the conversion of solid waste into a gas comprising hydrogen, in particular into syngas comprising hydrogen and hydrogen. After preparing solid recovered fuel pellets from solid waste like municipal solid waste 103, preferably with additional added biomass, in a in pelletizing facility 100 the respective solid recovered fuel pellets 117 are transported to the plant 1 and are provided to a torrefaction unit 200 in which the pellets are torrefied, i.e. oxidized sub stoichiometrically at temperatures of 250°C to 300°C.The term torrefaction is understood as a thermochemical treatment of the solid recovered fuel pellets at temperatures of 250°C to 320°C. It is carried out under atmospheric pressure and without adding further oxygen, e.g. without providing air. During the torrefaction process water contained in the solid recovered fuel pellets evaporates as do volatiles included in the solid recovered fuel pellets. Biopolymers included in the solid recovered fuel pellets partly decompose under release of volatiles. The product of the torrefaction process are charred pellets and torrefaction gas. The torrefaction of the pellets results in charred pellets 201, which are gasified in a gasification unit 300. Another product of the torrefaction is torrefaction gas 202 which is provided to a torrefaction gas processing unit 400. The product of the torrefaction gas processing unit 400 is a torrefaction syngas 401, whereas the product of the gasification unit 300 is a syngas 301. Both the syngas 301 and the torrefaction syngas 401 comprising water steam, carbon monoxide and hydrogen. Both syngases 301, 401 are introduced into the CO shift unit 500 which is described in detail with respect to Fig. 2 below. Shifted syngas 501 which is generated in the CO shift unit 500 is transferred to a gas cleaning unit 600 which separates hydrogen 601 from a purge gas 602. The pelletizing facility 100 is preferably off-site, i.e. situated not in the same location than the plant 1 for the conversion of solid waste into a gas comprising hydrogen.

Fig. 2 displays the CO shift unit 500. The first syngas stream 301 generated by the gasification unit 300 is introduced into a high-pressure scrubbing unit 502. The high-pressure scrubbing unit 502 is a conventional wet scrubber unit in which e.g. higher hydrocarbons are removed from the syngas 301. The high-pressure scrubbing unit 502 is fed with feed water 503 which is the condensed water 508 from a low temperature heat recovery which will be described later on. Water 505 which is collected in a sump 504 of the high-pressure scrubbing unit 502 is conveyed by conveying means 506 to a bleed water conduit 507. Excess condensed water 508 which is not needed as feed water 503 is conveyed to the bleed water conduit 507 as well. Cleaned syngas 509 generated in the high-pressure scrubbing unit 502 is provided downstream of the high-pressure scrubbing unit 502 to a first heat exchanger 518. The term conveying means within this document is understood as a pump and/or a compressor. Simultaneously to the cleaning of the first syngas stream 301 in the high-pressure scrubbing unit 502 the moisture of the cleaned syngas 509 can be controlled.

The syngas 401 being generated in the torrefaction gas processing unit 400 is conveyed to a saturation column 510 via a conveying means 511. By the conveying means 511 the syngas 401 is compressed, preferably to a pressure of 40 bar. The conveying means 511 can comprise several compressors with intercoolers which provide for a multistage intercooled compression of the syngas 401. Likewise, the purge gas 602 from the gas cleaning unit 600 is conveyed via a conveying means 512 to the saturation column 510 as well. By the conveying means 512 the purge gas 602 is compressed, preferably to a pressure of 40 bar. The conveying means 512 can comprise several compressors with intercoolers which provide for a multistage intercooled compression of the purge gas 602.The saturation column 510 is a conventional wet scrubber which is provided with process water 513 from a low temperature heat recovery unit 524 being described later on via conveying means 514. The water 515 collected in a sump 516 of the saturation column 510 is used as process water in a low temperature heat recovery unit 524 described below. By the saturation column 510 the syngas 401 and the purge gas 602 are mixed and, simultaneously, moisture is added to the resulting saturation column product gas 517. Depending on the parameters of the operation of the saturation column, i.e. in particular on the water flow and the water temperature, the moisture of the saturation column product gas 517 can be controlled.

The saturation column product gas 517 is provided together with the cleaned syngas 509 to a first heat exchanger 518. In the first heat exchanger 518 energy is transferred from a high temperature CO shift reactor offgas 519 to the cleaned syngas 509 and the saturation column product gas 517 which are combined downstream of the first heat exchanger 519 to a combined syngas stream 520. By the heat exchange in the first heat exchanger 518 the respective high temperature CO shift reactor offgas 519 is cooled while the cleaned syngas 509 and the purified gas stream 517 are heated. Preferably, the saturation column 510 is driven in such a way that the combined syngas stream 520 has a molar ratio of water steam to carbon monoxide of between 2.0 and 3.0, preferably between 2.4 and 2.6, in particular of about 2.5.

The combined syngas stream 520 is provided downstream of the first heat exchanger518 to a high temperature CO shift reactor 521 in which the above-described shift reaction is taking place. The high temperature CO shift reactor offgas 519 has a reduced water/steam and carbon monoxide content and an increased hydrogen (H₂) content compared to the combined syngas stream 520. The high temperature CO shift reactor offgas 519 is - as will be described in the following - guided through several heat exchangers to reduce its temperature including the first heat exchanger 518 to a low temperature CO shift reactor 522 in which the CO shift reaction as described above is taking place. A low temperature CO shift reactor offgas 523 is increased in its hydrogen (H₂) content compared to the high temperature CO shift reactor offgas 519 that is entering the low temperature CO shift reactor 522.

The low temperature CO shift reactor offgas 523 is guided downstream of the low temperature CO shift reactor 522 through a low temperature heat recovery unit 524. In this low temperature heat recovery unit 524 the heat content of the low temperature CO shift reactor offgas 523 is used to increase the temperature of several water streams. After entering the low temperature heat recovery unit 524 the low temperature CO shift reactor offgas 523 is subsequently guided through a second heat exchanger 525, a third heat exchanger 526, a fourth heat exchanger 527, a fifth heat exchanger 528 and a sixth heat exchanger 529. While passing these heat exchangers 524, 525, 526, 527, 528, 529 the temperature of the low temperature CO shift reactor offgas 523 is reduced steadily before leaving the low temperature heat recovery unit 524 as a syngas stream 530 and is passed, optionally and if necessary, through an air cooler 531. Thereafter, the syngas stream 530 is provided to the gas cleaning unit 600 as discussed above.

First, in the second heat exchanger 525 the heat content of the syngas stream 530 is used to heat feed water 508 to be used in the gasification unit 300. E.g. it is thus possible to heat this water 508 from 158°C to 205°C. Second, in the third heat exchanger 526 water is heated that can e.g. be used to generate high pressure steam. The water is e.g. heated from typically 155 to 200°C. Third, in the fourth heat exchanger 527 process water 513 is heated, typically from 135 to 158°C, which is used in the saturation column 510. Further use of this water as feed water 508 is possible, in particular after passing the second heat exchanger 525. In the fourth heat exchanger 527 the low temperature CO shift reactor offgas 523 is cooled below its dew point, thus, large amounts of condensing heat are released and used for the respective heat transfer. Fourth, in the fifth heat exchanger 528 boiler feed water 536 is heated, typically from 35°C to 155°C, which is preferably used to prepare high pressure steam. Fifth, in the sixth heat exchanger 529 water is heated from typically 25°C to 135°C for use in the gasification of the charred pellets 201 in the gasification unit 300.

The feed water 508 for the gasification unit 300 is at least a part of the water 515 collected in the sump 519 of the saturation column 510 as described above. The water 515 collected in the sump 516 of the saturation column 510 is entering the fourth heat exchanger 527. Water 521 from a waste water treatment unit (not shown) can be mixed with the water 515 after having passed the sixth heat exchanger 529. Downstream of the second heat exchanger 527 the heated fourth heat exchanger water offstream 533 is in part used as process water from low temperature heat recovery 513 in the saturation column 510 and in part it is guided through the second heat exchanger 525 to be used downstream of the second heat exchanger 525 partly as condensed water 508 to be used partly as feed water 503 in the high-pressure scrubbing unit 502 and partly as process water in the torrefaction unit 200. A further part of water downstream of the sixth heat exchanger 529 is used as condensate 534 provided e.g. to a water stripper. Other water like e.g. external high pressure boiler feed water 535 generated for applications outside the plant 1 is guided through the fifth heat exchanger 528 to be partly used as boiler feed water 536 e.g. in the gasification unit 300 and/or for the generation of low pressure steam and/or in the torrefaction unit 200. Another part of the boiler feed water 535 is guided downstream the fifth heat exchanger 528 through the second heat exchanger 526. Thereafter, it is passed through a seventh heat exchanger 537.

The CO shift unit 500 as part of the plant 1 for the conversion of solid waste into a product gas stream comprising hydrogen allows an energy efficient use of the low temperature heat energy in the low temperature heat recovery unit 524 to heat process water streams used in the plant 1.

### Reference numerals

- 1: plant for the conversion of solid waste
- 100: pelletizing facility
- 103: municipal solid waste
- 117: pellets
- 200: torrefaction unit
- 201: charred pellets
- 202: torrefaction gas
- 300: gasification unit
- 301: syngas
- 400: torrefaction gas processing unit
- 401: torrefaction syngas
- 500: CO shift unit
- 501: shifted syngas
- 502: high- pressure scrubbing unit
- 503: feed water
- 504: sump
- 505: water
- 506: conveying means
- 507: bleed water conduit
- 508: condensed water
- 509: cleaned syngas
- 510: saturation column
- 511: conveying means
- 512: conveying means
- 513: process water from low temperature heat recovery
- 514: conveying means
- 515: water
- 516: sump
- 517: saturation column product gas
- 518: first heat exchanger
- 519: high temperature CO shift reactor offgas
- 520: combined high temperature syngas stream
- 521: high temperature CO shift reactor
- 522: low temperature CO shift reactor
- 523: low temperature CO shift reactor offgas
- 524: low temperature heat recovery unit
- 525: second heat exchanger
- 526: third heat exchanger
- 527: fourth heat exchanger
- 528: fifth heat exchanger
- 529: sixth heat exchanger
- 530: syngas stream
- 531: air cooler
- 532: water
- 533: fourth heat exchanger water offstream
- 534: condensate
- 535: high pressure boiler feet water
- 536: boiler feed water
- 537: seventh heat exchanger
- 538: saturation column product gas
- 600: gas cleaning unit
- 601: product gas rich in hydrogen
- 602: purge gas

## Claims

1. Method for increasing the hydrogen content in the product gas stream of the torrefaction of solid recovered fuel pellets (117),
wherein the solid recovered fuel pellets (117) are torrefied to charred pellets (201) while generating torrefaction gas (202) which is converted to a torrefaction syngas (401) comprising hydrogen and carbon monoxide,
wherein a syngas stream comprising the torrefaction syngas (401) is provided to a CO shift unit (500) for reacting at least a part of the carbon monoxide with water steam to carbon dioxide and hydrogen generating shifted syngas (501),
wherein the shifted syngas (501, 523) is provided downstream of the CO shift unit (500) to a low temperature heat recovery unit (524) in which the shifted syngas (501, 523) is guided through at least two heat exchangers (525, 526, 527, 528, 529) in which the shifted syngas (523, 501) is in thermal exchange with at least two water streams that are used downstream of the respective heat exchangers (525, 526, 527, 528, 529) as process water during the production of the product gas stream for heating said at least two water streams.

2. Method according to claim 1, wherein the shifted syngas (530, 501) is provided to a gas cleaning unit (600) for generating a product gas stream (601) rich of hydrogen, preferably with a hydrogen content of 99.5 vol.-% and more, while generating a purge gas (602),
wherein both the purge gas (602) and the torrefaction syngas (401) are compressed and commonly introduced into a saturation column (510) to raise the water content in the syngas stream (520) up stream of the CO shift unit (500).

3. Method according to claim 1 or 2, wherein a first syngas stream (301) generated by the gasification of the charred pellets (202) is provided to a high-pressure scrubbing unit (502) to raise the water content in a cleaned syngas stream (509).

4. Method according to one of the preceding claims, wherein the shifted syngas (523, 501) is cooled in the low temperature heat recovery unit (524) by bringing into thermal contact with at least one of the following water streams:
a) a process water stream used for the humidification of the syngas stream (509) entering the CO shift unit;
b) a feed water for the gasification of the charred pellets (202); and
c) boiler water to produce high-pressure steam.

5. Method according to one of the preceding claims, wherein in the heat exchangers (525, 526, 527, 528, 529) of the low temperature heat recovery unit (524) the pressure of the process water is higher than the pressure of the shifted syngas (523).

6. Plant (1) for the conversion of solid waste provided as solid recovered fuel pellets (117) to a product gas stream (601) rich in hydrogen, comprising
a torrefaction unit (200) in which the solid recovered fuel pellets (117) are feedable from which a torrefaction gas (202) and charred pellets (201) are producible;
a torrefaction gas processing unit (400) in which the torrefaction gas (202) is convertible to torrefaction syngas (401);
a CO shift unit (500) downstream of the torrefaction unit (200) which is providable with a combined syngas stream (520) comprising at least the torrefaction syngas (401) and in which a shifted syngas (523, 530, 501) is producible; and
a low temperature heat recovery unit (524) downstream of the CO shift unit (500) which is providable with the shifted syngas (523, 501), said low temperature heat recovery unit (524) comprising at least two heat exchangers (525, 526, 527, 528, 529) which are each providable with the shifted syngas (523, 501) and a process water stream to increase the temperature of the process water streams.

7. Plant (1) according to claim 6, further comprising a saturation column (510) in which a water content at least of the torrefaction syngas (401) is adjustable.

8. Plant (1) according to claim 6 or 7, wherein the low temperature heat recovery unit (524) includes at least two of the following heat exchangers (525, 526, 527, 528, 529):
a) a second heat exchanger (525) in which feed water for a gasification unit (300) in which the charred pellets (202) are gasifiable is heatable by the shifted syngas (523, 501);
b) a third heat exchanger (526) in which water for the generation of high-pressure steam is heatable by the shifted syngas;
c) a fourth heat exchanger (527) in which water for use in the saturation column (510) for adjusting the water content at least of the torrefaction syngas upstream of the CO shift unit (500) is heatable by the shifted syngas (523, 501);
d) a fifth heat exchanger (528) in which water for the generation of high-pressure steam is heatable by the shifted syngas (523, 501); and
e) a sixth heat exchanger (529) in which water used in the gasification unit (300) in which the charred pellets (202) are gasifiable is heatable by the shifted syngas (501, 523).

## Patentansprüche

1. Verfahren zum Erhöhen des Wasserstoffgehalts in dem Erzeugnisgasstrom der Torrefizierung von festen Pellets aus zurückgewonnenem Brennstoff (117),
wobei die festen Pellets aus zurückgewonnenem Brennstoff (117) zu verkohlten Pellets (201) torrefiziert werden, während Torrefizierungsgas (202) generiert wird, das in ein Torrefizierungssynthesegas (401) umgewandelt wird, umfassend Wasserstoff und Kohlenmonoxid,
wobei ein Synthesegasstrom, umfassend das Torrefizierungssynthesegas (401), einer CO-Konvertierungseinheit (500) bereitgestellt wird, zum Umsetzen von mindestens einem Teil des Kohlenmonoxids mit Wasserdampf zu Kohlendioxid und Wasserstoff, wodurch konvertiertes Synthesegas (501) generiert wird,
wobei das konvertierte Synthesegas (501, 523) stromabwärts der CO-Konvertierungseinheit (500) einer Niedertemperatur-Wärmerückgewinnungseinheit (524) bereitgestellt wird, in der das konvertierte Synthesegas (501, 523) durch mindestens zwei Wärmetauscher (525, 526, 527, 528, 529) geführt wird, in dem das konvertierte Synthesegas (523, 501) in thermischem Austausch mit mindestens zwei Wasserströmen steht, die stromabwärts der jeweiligen Wärmetauscher (525, 526, 527, 528, 529) als Prozesswasser während der Erzeugung des Erzeugnisgasstroms zum Erwärmen der mindestens zwei Wasserströme verwendet werden.

2. Verfahren nach Anspruch 1, wobei das konvertierte Synthesegas (530, 501) einer Gasreinigungseinheit (600) zum Generieren eines wasserstoffreichen Erzeugnisgasstroms (601), vorzugsweise mit einem Wasserstoffgehalt von 99,5 Vol.-% und mehr, bereitgestellt wird, während ein Spülgas (602) generiert wird,
wobei sowohl das Spülgas (602) als auch das Torrefizierungssynthesegas (401) komprimiert und gemeinsam in eine Sättigungskolonne (510) eingeführt werden, um den Wassergehalt in dem Synthesegasstrom (520) stromaufwärts der CO-Konvertierungseinheit (500) zu steigern.

3. Verfahren nach Anspruch 1 oder 2, wobei ein erster Synthesegasstrom (301), der durch die Vergasung der verkohlten Pellets (202) generiert wird, einer Hochdruckwascheinheit (502) bereitgestellt wird, um den Wassergehalt in einem gereinigten Synthesegasstrom (509) zu steigern.

4. Verfahren nach einem der vorstehenden Ansprüche, wobei das konvertierte Synthesegas (523, 501) in der Niedertemperatur-Wärmerückgewinnungseinheit (524) gekühlt wird, durch thermisches Inkontaktbringen mit mindestens einem der folgenden Wasserströme:
a) einen Prozesswasserstrom, der für die Befeuchtung des Synthesegasstroms (509) verwendet wird, der in die CO-Konvertierungseinheit eintritt;
b) ein Speisewasser für die Vergasung der verkohlten Pellets (202); und
c) Kesselwasser, um Hochdruckdampf zu erzeugen.

5. Verfahren nach einem der vorstehenden Ansprüche, wobei in den Wärmetauschern (525, 526, 527, 528, 529) der Niedertemperatur-Wärmerückgewinnungseinheit (524) der Druck des Prozesswassers höher ist als der Druck des konvertierten Synthesegases (523).

6. Anlage (1) für die Umwandlung von festem Abfall, das einem wasserstoffreichen Erzeugnisgasstrom (601) als feste Pellets aus zurückgewonnenem Brennstoff (117) bereitgestellt wird, umfassend
eine Torrefizierungseinheit (200), in die die festen Pellets aus zurückgewonnenem Brennstoff (117) einspeisbar sind, aus denen ein Torrefizierungsgas (202) und verkohlte Pellets (201) erzeugbar sind;
eine Torrefizierungsgasverarbeitungseinheit (400), in der das Torrefizierungsgas (202) in Torrefizierungssynthesegas (401) umwandelbar ist;
eine CO-Konvertierungseinheit (500) stromabwärts der Torrefizierungseinheit (200), die mit einem kombinierten Synthesegasstrom (520) bereitstellbar ist, umfassend mindestens das Torrefizierungssynthesegas (401) und in der ein konvertiertes Synthesegas (523, 530, 501) erzeugbar ist; und
eine Niedertemperatur-Wärmerückgewinnungseinheit (524) stromabwärts der CO-Konvertierungseinheit (500), die mit dem konvertierten Synthesegas (523, 501) bereitgestellt werden kann, die Niedertemperatur-Wärmerückgewinnungseinheit (524) umfassend mindestens zwei Wärmetauscher (525, 526, 527, 528, 529), die jeweils mit dem konvertierten Synthesegas (523, 501) und einem Prozesswasserstrom bereitstellbar sind, um die Temperatur der Prozesswasserströme zu erhöhen.

7. Anlage (1) nach Anspruch 6, ferner umfassend eine Sättigungskolonne (510), in der ein Wassergehalt mindestens des Torrefizierungssynthesegases (401) einstellbar ist.

8. Anlage (1) nach Anspruch 6 oder 7, wobei die Niedertemperatur-Wärmerückgewinnungseinheit (524) mindestens zwei der folgenden Wärmetauscher (525, 526, 527, 528, 529) einschließt:
a) einen zweiten Wärmetauscher (525), in dem Speisewasser für eine Vergasungseinheit (300), in der die verkohlten Pellets (202) vergasbar sind, durch das konvertierte Synthesegas (523, 501) erwärmbar ist;
b) einen dritten Wärmetauscher (526), in dem Wasser für die Generierung von Hochdruckdampf durch das konvertierte Synthesegas erwärmbar ist;
c) einen vierten Wärmetauscher (527), in dem Wasser zur Verwendung in der Sättigungskolonne (510) zum Einstellen des Wassergehalts mindestens des Torrefizierungssynthesegases stromaufwärts der CO-Konvertierungseinheit (500) durch das konvertierte Synthesegas (523, 501) erwärmbar ist;
d) einen fünften Wärmetauscher (528), in dem Wasser für die Generierung von Hochdruckdampf durch das konvertierte Synthesegas (523, 501) erwärmbar ist; und
e) einen sechsten Wärmetauscher (529), in dem Wasser, das in der Vergasungseinheit (300) verwendet wird, in der die verkohlten Pellets (202) vergasbar sind, durch das konvertierte Synthesegas (501, 523) erwärmbar ist.

## Revendications

1. Procédé pour augmenter la teneur en hydrogène dans le courant gazeux de produit de la torréfaction de pastilles combustibles solides récupérées (117),
les pastilles de combustible solides récupérées (117) étant torréfiées en pastilles carbonisées (201) tout en générant un gaz de torréfaction (202) qui est transformé en un gaz de synthèse de torréfaction (401) comprenant de l'hydrogène et du monoxyde de carbone,
un flux de gaz de synthèse comprenant le gaz de synthèse de torréfaction (401) étant fourni à une unité de conversion de CO (500) pour faire réagir au moins une partie du monoxyde de carbone avec de la vapeur d'eau en dioxyde de carbone et en gaz de synthèse converti générant de l'hydrogène (501),
le gaz de synthèse converti (501, 523) étant fourni en aval de l'unité de conversion de CO (500) vers une unité de récupération de chaleur à basse température (524), le gaz de synthèse converti (501, 523) étant guidé à travers au moins deux échangeurs de chaleur (525, 526, 527, 528, 529), le gaz de synthèse converti (523, 501) étant en échange thermique avec au moins deux courants d'eau qui sont utilisés en aval des échangeurs de chaleur respectifs (525, 526, 527, 528, 529) comme de l'eau de traitement pendant la production du courant de gaz produit pour chauffer lesdits au moins deux courants d'eau.

2. Procédé selon la revendication 1, dans lequel le gaz de synthèse converti (530, 501) est fourni à une unité d'épuration de gaz (600) pour générer un courant de gaz produit (601) riche en hydrogène, de préférence avec une teneur en hydrogène de 99,5 % en volume et plus, tout en générant un gaz de purge (602),
à la fois le gaz de purge (602) et le gaz de synthèse de torréfaction (401) étant comprimés et introduits en commun dans une colonne de saturation (510) pour augmenter la teneur en eau dans le courant de gaz de synthèse (520) en amont de l'unité de conversion de CO (500).

3. Procédé selon la revendication 1 ou 2, dans lequel un premier courant de gaz de synthèse (301) généré par la gazéification des pastilles carbonisées (202) est fourni à une unité de lavage à haute pression (502) pour augmenter la teneur en eau dans un courant de gaz de synthèse nettoyé (509).

4. Procédé selon l'une des revendications précédentes, dans lequel le gaz de synthèse converti (523, 501) est refroidi dans l'unité de récupération de chaleur basse température (524) par mise en contact thermique avec au moins l'un des courants d'eau suivants :
a) un flux d'eau de traitement utilisé pour l'humidification du flux de gaz de synthèse (509) entrant dans l'unité de conversion de CO ;
b) une eau d'alimentation pour la gazéification des pastilles carbonisées (202) ; et
c) l'eau de chaudière pour produire de la vapeur à haute pression.

5. Procédé selon l'une des revendications précédentes, dans lequel, dans les échangeurs de chaleur (525, 526, 527, 528, 529) de l'unité de récupération de chaleur à basse température (524), la pression de l'eau de procédé est supérieure à la pression du gaz de synthèse converti (523).

6. Installation (1) pour la transformation de déchets solides fournis sous forme de pastilles de combustible solides récupérées (117) en un courant de produit gazeux (601) riche en hydrogène, comprenant
une unité de torréfaction (200), les pastilles de combustible solides récupérées (117) pouvant être alimentées à partir desquelles un gaz de torréfaction (202) et des pastilles carbonisées (201) peuvent être produits ;
une unité de traitement de gaz de torréfaction (400), le gaz de torréfaction (202) étant transformable en gaz de synthèse de torréfaction (401) ;
une unité de conversion de CO (500) en aval de l'unité de torréfaction (200) qui peut être fournie par un flux de gaz de synthèse combiné (520) comprenant au moins le gaz de synthèse de torréfaction (401) et un gaz de synthèse converti (523, 530, 501) pouvant être produit ; et
une unité de récupération de chaleur à basse température (524) en aval de l'unité de conversion de CO (500) qui peut être fournie avec le gaz de synthèse converti (523, 501), ladite unité de récupération de chaleur à basse température (524) comprenant au moins deux échangeurs de chaleur (525, 526, 527, 528, 529) qui peuvent chacun être fourni avec le gaz de synthèse converti (523, 501) et un courant d'eau de traitement pour augmenter la température des courants d'eau de traitement.

7. Installation (1) selon la revendication 6, comprenant en outre une colonne de saturation (510) dans laquelle une teneur en eau au moins du gaz de synthèse de torréfaction (401) est réglable.

8. Installation (1) selon la revendication 6 ou 7, dans laquelle l'unité de récupération de chaleur à basse température (524) comporte au moins deux des échangeurs de chaleur suivants (525, 526, 527, 528, 529) :
a) un deuxième échangeur de chaleur (525), l'eau d'alimentation pour une unité de gazéification (300) dans laquelle les pastilles carbonisées (202) sont gazéifiables pouvant être chauffée par le gaz de synthèse converti (523, 501) ;
b) un troisième échangeur de chaleur (526), l'eau pour la génération de vapeur à haute pression pouvant être chauffée par le gaz de synthèse converti ;
c) un quatrième échangeur de chaleur (527), l'eau à utiliser dans la colonne de saturation (510) pour ajuster la teneur en eau d'au moins le gaz de synthèse de torréfaction en amont de l'unité de conversion de CO (500) pouvant être chauffé par le gaz de synthèse converti (523, 501) ;
d) un cinquième échangeur de chaleur (528), l'eau pour la génération de vapeur à haute pression peut être chauffée par le gaz de synthèse converti (523, 501) ; et
e) un sixième échangeur de chaleur (529), l'eau utilisée dans l'unité de gazéification (300) dans laquelle les pastilles carbonisées (202) sont gazéifiables étant chauffable par le gaz de synthèse converti (501, 523).
